# EUROPEAN PATENT APPLICATION

(11) **EP 2 975 727 A1**
(43) Date of publication of application: **20.01.2016**
(21) Application number: 14177353.1
(22) Date of filing: 17.07.2014
(51) Int. Cl.: H02J 9/06, H02M 7/08

(54) **Three-wire UPS system with artificial neutral**

(71) Applicant: ABB Technology AG, 8050 Zürich (CH)
(72) Inventor: Paatero, Esa-Kai, 6648 Minusio (CH)
(74) Representative: ABB Patent Attorneys

(57) **Abstract**

The present invention provides an uninterrupted power supply system (200) for use of at least two UPS modules (206), comprising a three-phase power supply input (202) for connection of a three-phase AC power supply (204), a DC power supply input (210) for connection of a DC power supply (212), a AC power link (208) for connecting the three-phase power supply input (202) to the at least two UPS modules (206), and a common DC link line (214) connecting the DC power supply input (210) to DC links (216) of the at least two UPS modules (206), whereby the common DC link line (214) provides a common reference junction with a galvanic connection to a common pole of the DC power supply input (210), wherein the UPS system (200) comprises a magnetically coupled circuit (224), which is connected to the AC power link (208), for generating an artificial neutral (230), whereby the artificial neutral (230) is connected to the galvanic connection of the common DC link line (214) and provides an internal current return path (218) for the at least two UPS modules (206) to maintain independent voltage regulation of its DC link (216) for the UPS modules (206) when powered from the three- phase power supply input (202). The present invention also provides a corresponding method for operation of an uninterrupted power supply system (200) for use of at least two UPS modules (206).

## Description

### Technical Field

The present invention relates to the field of uninterrupted power supply (UPS) systems comprising at least two UPS modules, which are powered by an AC power supply. In particular, the present invention relates to UPS system for use of at least two UPS modules, comprising a three-phase power supply input for connection of a three-phase AC power supply, a DC power supply input for connection of a DC power supply, a AC power link for connecting the three-phase power supply input to the at least two UPS modules, a common DC link connecting the DC power supply input to DC link lines of the at least two UPS modules, whereby the common DC link provides a common reference junction with a galvanic connection to a common pole of the DC power supply input.

### Background Art

In uninterrupted power supply (UPS) systems two installation types are commonly used, one installation type for three-wire AC power supplies and another installation type for four-wire AC power supplies. The two installation types both refer to a three-phase alternate current and differ in the presence of a Neutral (N) wire provided by the AC power supply in case of the four-wire AC power supply.

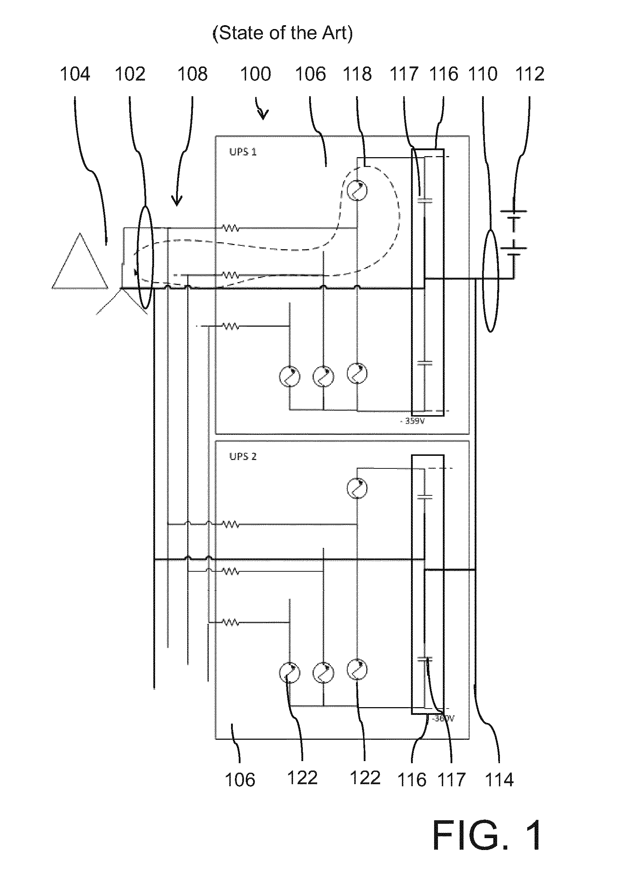

For four-wire applications control reference for both rectifier and inverter is N, controlled parameters being for rectifier phase-N current for high Power Factor (PF) and for inverter phase-N voltage for low distortion, loads nearly always being between phase and N. A UPS system connected to a four-wire AC power supply, as known in the Art, can be seen with respect to Fig. 1.

Fig. 1 shows an UPS system 100 with a four-wire AC power supply input 102 comprising three phases and neutral. The power supply input 102 is connected to a respective four-wire AC power supply 104.

The UPS system 100 comprises two individual UPS modules 106. As can be seen in Fig. 1, the UPS system 100 further comprises an AC power link 108, which connects the power supply input 102 to the UPS modules 106. For a typical installation shown in Fig. 1, the individual UPS modules 106 are connected in parallel for enhanced reliability through redundancy and/or for added power capacity in the case of failures of a power mains. Each UPS module 106 typically comprises rectifiers, AC/DC converters and DC/AC converters for providing output power to a load, which are schematically indicated by the provided switches 120. Hence, the parallel UPS modules 106 are typically connected within the UPS system 100 to provide a common utility input, a common load output and may also have other hardwired common hardware connected thereto, e.g. a common energy storage system, which is typically a battery 112.

The UPS system 100 also comprises a DC power supply input 110, which is externally connected to the battery 112. Internally, the UPS system 100 comprises a common DC link line 114, which connects the DC power supply input 110 to DC links 116 of the UPS modules 106. As can be further seen in Fig. 1, the common DC link line 114 is galvanically coupled to neutral of the AC power supply 104 and one pole of the battery 112. Each DC link 116 of each UPS module 106 comprises a pair of storage capacitors 117, as can be further seen in Fig. 1.

The battery 112 may have different configurations for connection to an internal main circuit of the UPS system 100, typically being a split battery or a two sided battery, which is centered on neutral, or a single string battery connected to a convenient position in the UPS system 100. In all of these battery configurations, typically one wire is galvanically connected to the UPS system 100. For the split battery, this wire is connected to the midpoint of the 112 battery, for the single string battery 112, as shown in Fig. 1, it can be connected to either end thereof. Other ends of the battery 112 are typically connected to the UPS system 100 through a bi-directional converter for voltage and current control during both discharge and charge.

The galvanic battery connection is preferably to N in a 4-wire application as thus no path is introduced for a current circulating between rectifiers of the different UPS modules. Accordingly, as indicated by arrow 118, an internal current return path is provided within the UPS module 106. Since DC links of individual UPS modules typically have slightly different values of provided voltages due to measurement/ calibration uncertainties. This is not a concern as links have no common current return path and each rectifier operates as a single phase converter vs. source neutral controlling the DC links of discrete and separate UPS. Parallel N current paths exist through the common battery connection, i.e. the common DC link line 114, but have no effect on rectifier capability nor link control, since the current is minor due to impedance of the respective current paths. Therefore, these rectifiers are capable of maintaining independent internal DC link regulation within each UPS modules.

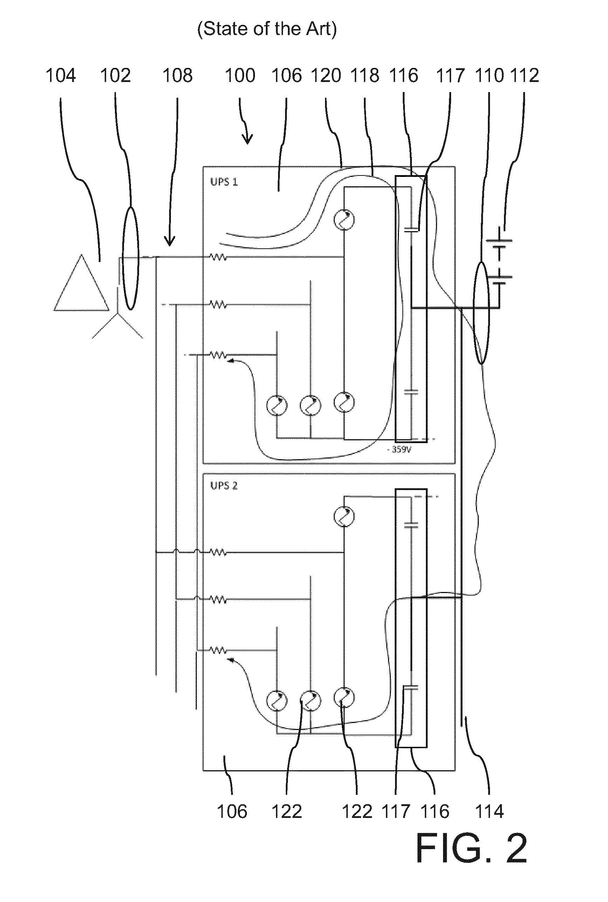

However, trying to apply the UPS topology designed for a four-wire application without the N, i.e. as a three-wire application, which can be seen in Fig. 2, will cause problems. A UPS system 100 as three-wire application is depicted in Fig. 2. The setup and the components are apart from the missing wire identical, so that the same reference numerals are used as for the UPS system shown in Fig. 1. The problems arise as the rectifier control reference and current return path to utility, which are realized via Neutral in the four-wire application, are not available in the three-wire application.

This can be remedied with appropriate control firmware for a single UPS module 106. Nevertheless, this results in the UPS modules 106 requiring complex firmware and additional current measurement and control hardware for robust operation.

For a parallel configuration of individual UPS modules 106 and a common battery 112, which are commonly connected to an internal reference for the rectifiers, this setup introduces an external return path for rectifier current through any parallel DC link line 116 of parallel UPS modules 106, as indicated by arrow 120. The rectifiers of the different UPS modules try to maintain their voltages independently until they run into current limitation. Hence, uncontrolled current can flow between rectifiers in different UPS modules leading to severe loading unbalance and poor utility Power factor and current distortion.

### Disclosure of Invention

It is an object of the present invention to provide an above uninterrupted power supply (UPS) system, which overcomes at least some of the above disadvantages. In particular, it is an object of the present invention to provide an UPS system, which enables simple design of internal UPS modules, which enables operation of internal UPS modules without disturbance of current originated from other UPS modules, and which reduces effects of return current from UPS modules though other UPS modules.

This object is achieved by the independent claims. Advantageous embodiments are given in the dependent claims.

In particular, the present invention provides an uninterrupted power supply system for use of at least two UPS modules, comprising a three-phase power supply input for connection of a three-phase AC power supply, a DC power supply input for connection of a DC power supply, a AC power link for connecting the three-phase power supply input to the at least two UPS modules, and a common DC link line connecting the DC power supply input to DC links of the at least two UPS modules, whereby the common DC link line provides a common reference junction with a galvanic connection to a common pole of the DC power supply input, whereby the UPS system comprises a magnetically coupled circuit, which is connected to the AC power link, for generating an artificial neutral, whereby the artificial neutral is connected to the galvanic connection of the common DC link line and provides an internal current return path for the at least two UPS modules to maintain independent voltage regulation of its DC link for the UPS modules when powered from the three- phase power supply input.

The present invention also provides a method for operation of an uninterrupted power supply system for use of at least two UPS modules, comprising the steps of connecting a three-phase AC power supply to the UPS system, connecting a DC power supply to the UPS system, providing a AC power link for connecting the three-phase AC power supply to the at least two UPS modules, and providing a common DC link line connecting the DC power supply to DC links of the at least two UPS modules, whereby a common reference junction is provided with a galvanic connection to a common pole of the DC power supply to the common DC link line, whereby the method comprises the additional step of connecting a magnetically coupled circuit to the AC power link for generating an artificial neutral, whereby the artificial neutral is connected to the galvanic connection of the common DC link and provides an internal current return path for the at least two UPS modules to maintain independent voltage regulation of its DC link for the UPS modules when powered from the three- phase power supply input.

The basic idea of the invention is to provide the artificial neutral using the magnetically coupled circuit, so that a current return path between the artificial neutral and the galvanic connection of the common DC link is provided. This enables to shunt a current path between the AC source, or multiple AC sources, and the DC links of parallel UPS modules through the common DC link lin, i.e. the galvanic connection. Accordingly, components of the UPS modules like rectifiers and power converters, which are designed for use in four-wire applications, can also be used in three-wire applications, since disturbance due to return currents originated from parallel UPS modules can be reduced or even avoided. Hence, hardware changes of the UPS modules can be avoided, as well as major firmware changes in the UPS modules, so that UPS modules can be shared for three-wire and four-wire applications. Control of the UPS modules can be easily implemented in a stable manner without influences of return currents from other UPS modules.

Additionally, also system auxiliary functions of the UPS system can use the provided artificial neutral for current return. Hence, no three-wire specific modifications are required to these system auxiliary functions compared to a four-wire application. System auxiliary functions comprise e.g. auxiliary power supply, controlled switches or contactors.

Typically, one pole of the DC power supply is directly connected to the common DC link, i.e. this pole of the DC power supply is not affected by an power converter, which can be provide in the DC power supply.

According to a modified embodiment of the invention the magnetically coupled circuit is provided as a three-phase current transformer having a midpoint, and the artificial neutral is connected to a midpoint of the three-phase current transformer. The three-phase current transformer can be easily used for providing the artificial neutral. Such current transformers are readily available in different sizes for different kinds of applications. The three-phase current transformer comprises three windings connected to the three AC phases on their one end, end commonly connected to form the midpoint on their other end.

According to a modified embodiment of the invention the current transformer is provided as a zigzag transformer. The zigzag transformer is a special purpose transformer with a zigzag or 'interconnected star' winding connection, such that each output is the vector sum of two phases offset by 120 degrees. It can suitably be used for the creation of the artificial neutral from the three-wire AC power supply phase system.

According to a modified embodiment of the invention the current transformer is provided with a common core for all phases. Current transformers with a common core typically have a high stiffness. Hence, the current transformer with the common core is suitable in environments, where mechanical liability is important and facilitates the handling of the current transformer. Nevertheless, according to a modified embodiment of the invention the current transformer is provided with an individual core for each phase. The current transformer is suitable for providing the artificial neutral independent from the connection of the magnetic cores of the three phases.

According to a modified embodiment of the invention the magnetically coupled circuit is distributed to a single UPS module or a subset of the UPS modules. Hence, the artificial neutral can be connected as required, without impact on the entire UPS system. Furthermore, multiple magnetically coupled circuits can be provided for different subsets of the UPS modules. Hence, multiple artificial neutrals can be provided as required, so that e.g. UPS modules can be separated in respect to the artificial neutral.

According to a modified embodiment of the invention the uninterrupted power supply system comprises a DC power supply, which is connected to the DC power supply input. Hence, the DC power supply is integral component of the UPS system. Nevertheless, the DC power supply can be provided e.g. with a modular design for quick and simple replacement within the UPS system.

According to a modified embodiment of the invention the DC power supply is a battery or a split three-wire supply with its midpoint connected to the artificial neutral. The battery provides a means for storage of DC power, which can be used even in cases of blackout of the AC power source. The split three-wire supply overcomes limitations in respect to storage capacity or in respect to size and weight, which are typically to be considered when using a battery.

According to a modified embodiment of the invention the uninterrupted power supply system comprises an three-phase AC power supply, which is connected to the three-phase power supply input. Hence, the AC power supply is an integral component of the UPS system. Nevertheless, the three-phase AC power supply can be provided with a modular design for quick and simple replacement. Different kinds of implementations of three-phase AC power supplies are known, and do not have to be discussed in detail.

According to a modified embodiment of the invention the magnetically coupled circuit is provided within an enclosure. With the enclosure, the magnetically coupled circuit can e.g. be provided individually for use with the UPS system. Hence, the UPS system can easily be modified for use with a four-wire application or a three-wire application by providing the enclosure with the magnetically coupled circuit and only minor additional changes. In a modified embodiment, the magnetically coupled circuit can be provided within the enclosure externally, e.g. as an external component, which can e.g. be connected between the three-wire AC power source and the remainder of the UPS system. Accordingly, almost identical UPS systems can be provided for use with a four-wire application or a three-wire application, and adaptation to the three-wire application is achieved by connection of the enclosure with the magnetically coupled circuit. The remainder of the UPS system is preferably provided in one or multiple enclosures, e.g. in a set of system racks, with are located side-by-side. Further preferred, the enclosures comprising the magnetically coupled circuit and the remainder of the UPS system can be located side-by-side for facilitating connection between the enclosures.

According to a modified embodiment of the invention the magnetically coupled circuit is provided as a module. The module can e.g. be inserted into an enclosure of the remainder of the UPS system. Hence, the module can easily be added to a UPS system, so that adaptation of a three-wire UPS system can easily be achieved. Also replacement of the module can easily be achieved, e.g. for maintenance purposes or system modification.

### Brief Description of Drawings

These and other aspects of the invention will be apparent from and elucidated with reference to the embodiments described hereinafter.

In the drawings:
- Fig. 1: shows a four-wire uninterrupted power supply system known in the Art as a schematic drawing,
- Fig. 2: shows a three-wire uninterrupted power supply system known in the Art as a schematic drawing,
- Fig. 3: shows a three-wire uninterrupted power supply system according to a first, preferred embodiment with artificial neutral provided by a magnetically coupled circuit as a schematic drawing,
- Fig. 4: shows a detailed view of a magnetically coupled circuit of the three-wire uninterrupted power supply system and the three-wire AC power source, as shown in Fig. 3,
- Fig. 5: shows a detailed view of the magnetically coupled circuit according to first embodiment as shown in Fig. 3,
- Fig. 6: shows a detailed view of a magnetically coupled circuit according to a second embodiment as a schematic drawing,
- Fig. 7: shows a detailed view of a magnetically coupled circuit according to a second embodiment as a schematic drawing, and
- Fig. 8: shows a detailed view of a magnetically coupled circuit according to a second embodiment as a schematic drawing.

### Detailed Description of the Invention

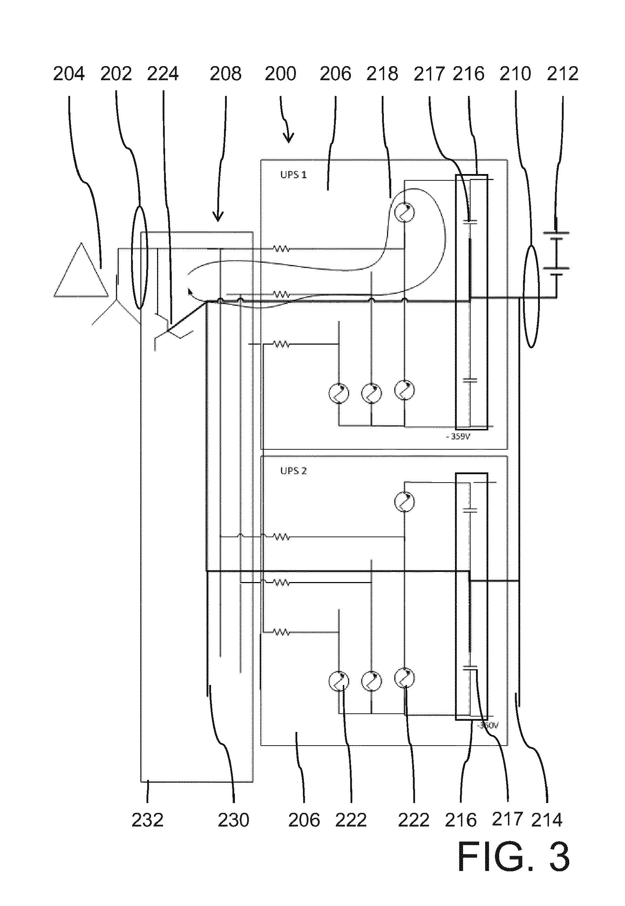

Fig. 3 shows an UPS system 200 according to a first, preferred embodiment of the present invention.

The UPS system 200 comprises a three-phase power supply input 202 comprising three phases L1-L3. The power supply input 202 is connected to a respective three-phase AC power supply 204. In an alternate embodiment, the three-wire AC power supply 204 forms part of the UPS system 200.

The UPS system 200 further comprises two individual UPS modules 206 and an AC power link 208, which connects the power supply input 202 to the UPS modules 206. According to the installation shown in Fig. 3, the individual UPS modules 206 are connected in parallel. Each UPS module 206 comprises rectifiers, AC/DC converters and DC/AC converters for providing output power to a load, as indicated by depicted switches 222.

The UPS system 200 also comprises a DC power supply input 210, which is externally connected to a DC power supply 212, which is a battery 212 in this embodiment. In an alternate embodiment, the DC power supply 212 forms part of the UPS system 200.

Internally, the UPS system 200 comprises a common DC link line 214, which connects the DC power supply input 210 to DC links 216 of the UPS modules 206. As can be seen in Fig. 3, the DC link 216 of each UPS module 206 comprises a set of storage capacitors 217.

The battery 212 in this embodiment is a single string battery, whereby one end thereof is galvanically connected to the UPS system 200. The common DC link line 214 provides a common reference junction with a galvanic connection to a common pole of the DC power supply input 210.

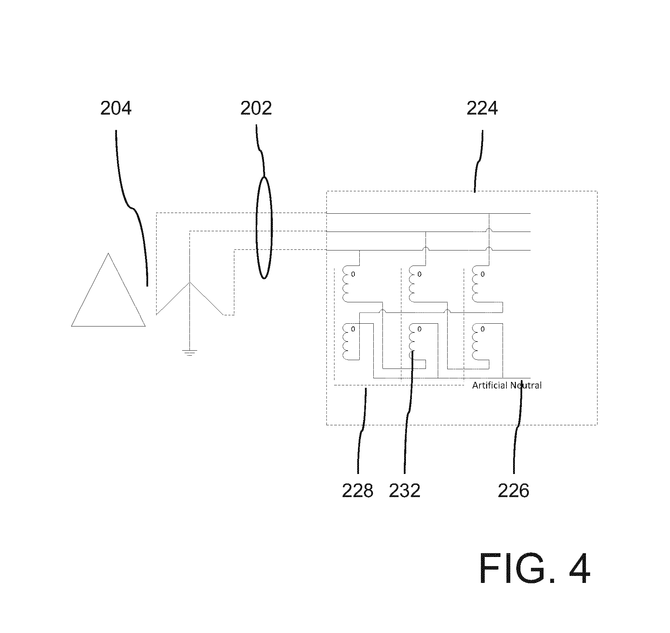

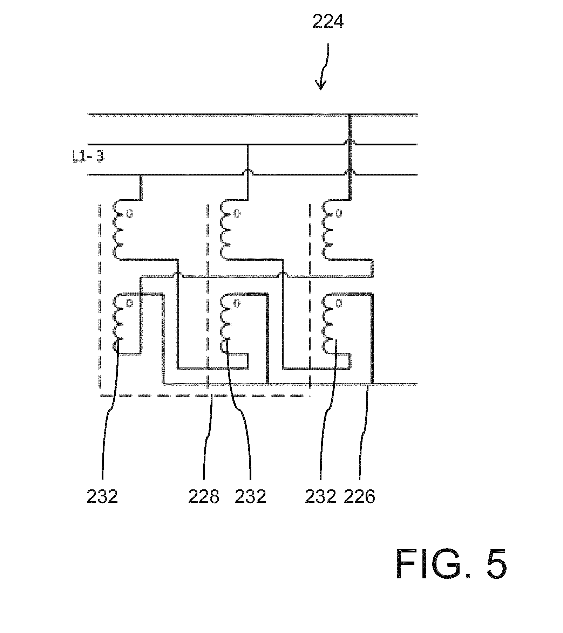

The UPS system 200 further comprises a magnetically coupled circuit 224, which is connected to the AC power link 208. The magnetically coupled circuit 224 in this embodiment is provided as a three-phase zigzag transformer having a midpoint 226, as can be seen in more detail in Figs. 4 and 5. The zigzag transformer 224 according to the first embodiment is provided with a common core 228 for the windings 230 of all phases L1-L3.

In this embodiment the zigzag transformer 224 is connected to a common artificial neutral 230, which is distributed to all UPS modules 206. The artificial neutral 230 is connected via the UPS modules 206 to the galvanic connection of the common DC link line 214, thereby forming an internal current return path, as indicated by arrow 218. In an alternate embodiment, the artificial neutral 230 is routed to the common DC link line 214 out of the UPS modules 206.

The zigzag transformer 224 is provided within an enclosure 236. Additionally, the AC power link 208 is partially provided within the enclosure 236. The enclosure 236 is connected between the three-wire AC power supply 204 and the remainder of the UPS system 200, which is provided in multiple enclosures, which are not depicted in the figures.

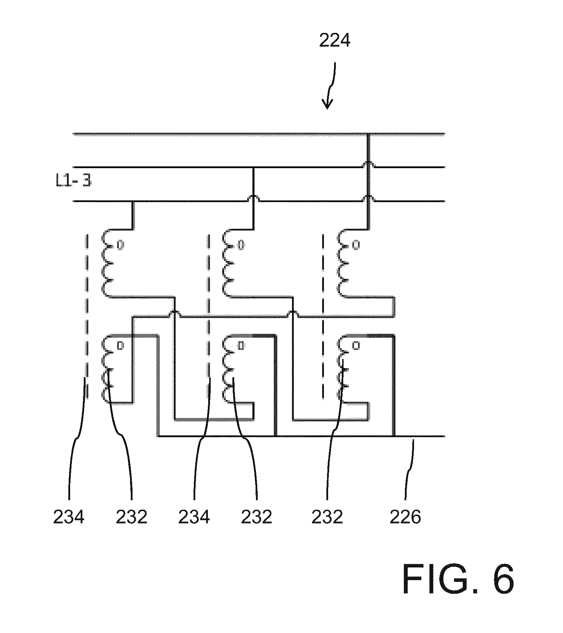

Fig. 6 refers to a second embodiment of an UPS system 200 of the present invention. The UPS system 200 of the second embodiment is identical to that of the first embodiment except for the structure of the magnetically coupled circuit 224. According to the second embodiment, the magnetically coupled circuit 224 is provided as a three-phase zigzag transformer having a midpoint 226, whereby the windings 230 of each phase L1 - L3 are provided on individual cores 234. Since further components of the UPS system 200 of the second embodiment are identical to those of the first embodiment, a repeated description of these components is omitted.

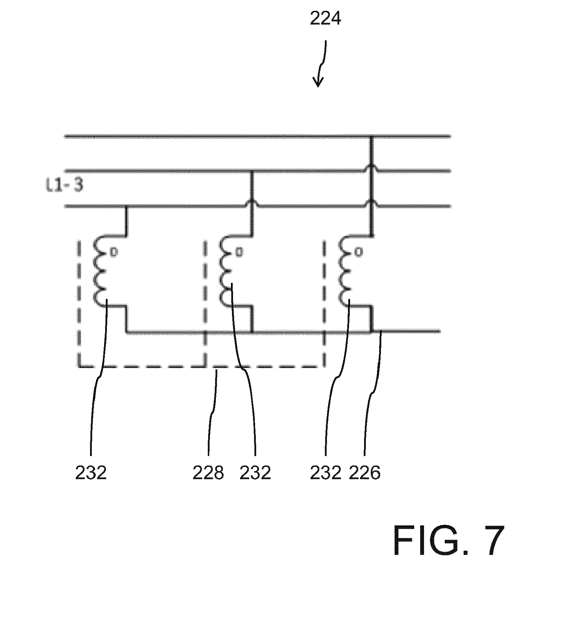

Fig. 7 refers to a third embodiment of an UPS system 200 of the present invention. The UPS system 200 of the third embodiment is identical to that of the first embodiment except for the structure of the magnetically coupled circuit 224. According to the third embodiment, the magnetically coupled circuit 224 is provided as a three-phase transformer having a midpoint 226, whereby the windings 230 of each phase L1 - L3 are provided on a common core 228. Since further components of the UPS system 200 of the third embodiment are identical to those of the first embodiment, a repeated description of these components is omitted.

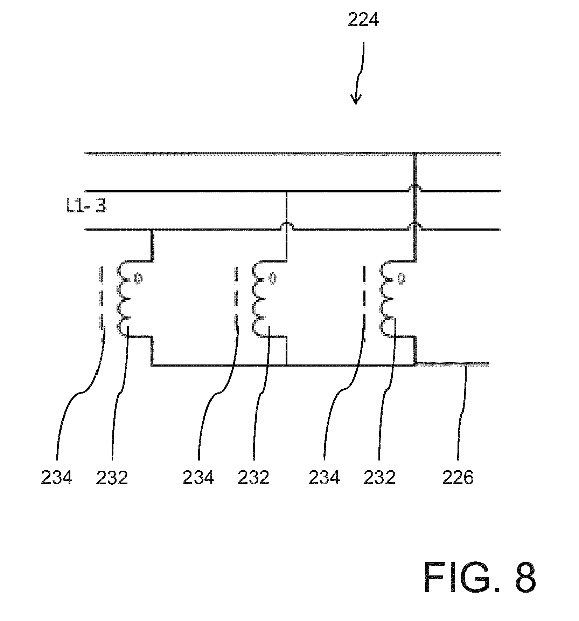

Fig. 8 refers to a fourth embodiment of an UPS system 200 of the present invention. The UPS system 200 of the fourth embodiment is identical to that of the first embodiment except for the structure of the magnetically coupled circuit 224. According to the fourth embodiment, the magnetically coupled circuit 224 is provided as a three-phase transformer having a midpoint 226, whereby the windings 230 of each phase L1 - L3 are provided on individual cores 234. Since further components of the UPS system 200 of the fourth embodiment are identical to those of the first embodiment, a repeated description of these components is omitted.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 100: U PS system (state of the Art)
- 102: three-phase power supply input (state of the Art)
- 104: AC power supply (state of the Art)
- 106: UPS module (state of the Art)
- 108: AC power link (state of the Art)
- 110: DC power supply input (state of the Art)
- 112: energy storage system, battery (state of the Art)
- 114: common DC link (state of the Art)
- 116: DC link line (state of the Art)
- 117: storage capacitor (state of the Art)
- 118: arrow, internal current return path (state of the Art)
- 120: arrow, external current return path (state of the Art)
- 122: switch (state of the Art)
- 200: UPS system
- 202: three-phase power supply input
- 204: three-phase AC power supply
- 206: UPS module
- 208: AC power link
- 210: DC power supply input
- 212: DC power supply, battery
- 214: common DC link line
- 216: DC link
- 217: storage capacitor
- 218: arrow, internal current return path
- 222: switch
- 224: magnetically coupled circuit, transformer
- 226: midpoint
- 228: common core
- 230: artificial neutral
- 232: winding
- 234: individual core
- 236: enclosure

## Claims

1. Uninterrupted power supply system (200) for use of at least two UPS modules (206), comprising
a three-phase power supply input (202) for connection of a three-phase AC power supply (204),
a DC power supply input (210) for connection of a DC power supply (212), a AC power link (208) for connecting the three-phase power supply input (202) to the at least two UPS modules (206), and
a common DC link line (214) connecting the DC power supply input (210) to DC links (216) of the at least two UPS modules (206), whereby
the common DC link line (214) provides a common reference junction with a galvanic connection to a common pole of the DC power supply input (210),
**characterized in that**
the UPS system (200) comprises a magnetically coupled circuit (224), which is connected to the AC power link (208), for generating an artificial neutral (230), whereby the artificial neutral (230) is connected to the galvanic connection of the common DC link line (214) and provides an internal current return path (218) for the at least two UPS modules (206) to maintain independent voltage regulation of its DC link (216) for the UPS modules (206) when powered from the three- phase power supply input (202).

2. Uninterrupted power supply system (200) according to claim 1,
**characterized in that**
the magnetically coupled circuit (224)is provided as a three-phase current transformer having a midpoint (226), and
the artificial neutral (230) is connected to the midpoint (226) of the three-phase current transformer (224).

3. Uninterrupted power supply system (200) according to preceding claim 2,
**characterized in that**
the current transformer (224) is provided as a zigzag transformer.

4. Uninterrupted power supply system (200) according to any of preceding claims 2 or 3,
**characterized in that**
the current transformer (224) is provided with a common core (228) for all phases.

5. Uninterrupted power supply system (200) according to any of preceding claims 2 or 3,
**characterized in that**
the current transformer (224) is provided with an individual core (234) for each phase.

6. Uninterrupted power supply system (200) according to any preceding claim,
**characterized in that**
the magnetically coupled circuit (224) is distributed to a single UPS module (206) or a subset of the UPS modules (206).

7. Uninterrupted power supply system (200) according to any preceding claim,
**characterized in that**
the uninterrupted power supply system (200) comprises a DC power supply (212), which is connected to the DC power supply input (210).

8. Uninterrupted power supply system (200) according to preceding claim 7,
**characterized in that**
the DC power supply (212) is a battery or a split three-wire supply with its midpoint connected to the artificial neutral (230).

9. Uninterrupted power supply system (200) according to any preceding claim,
**characterized in that**
the uninterrupted power supply system (200) comprises an AC power supply (204), which is connected to the three-phase power supply input (202).

10. Uninterrupted power supply system (200) according to any preceding claim,
**characterized in that**
the magnetically coupled circuit (224) is provided within an enclosure (230).

11. Uninterrupted power supply system (200) according to any preceding claim,
**characterized in that**
the magnetically coupled circuit (224) is provided as a module.

12. Method for operation of an uninterrupted power supply system (200) for use of at least two UPS modules (206), comprising the steps of
connecting a three-phase AC power supply (204) to the UPS system (200),
connecting a DC power supply (212) to the UPS system (200),
providing a AC power link (208) for connecting the three-phase AC power supply (204) to the at least two UPS modules (206), and
providing a common DC link line (214) connecting the DC power supply (212) to DC links (216) of the at least two UPS modules (206), whereby
a common reference junction is provided with a galvanic connection to a common pole of the DC power supply (212) to the common DC link line (214),
**characterized in that**
the method comprises the additional step of connecting a magnetically coupled circuit (224) to the AC power link (208) for generating an artificial neutral (230), whereby the artificial neutral (230) is connected to the galvanic connection of the common DC link (214) and provides an internal current return path (218) for the at least two UPS modules (206) to maintain independent voltage regulation of its DC link (216) for the UPS modules (206) when powered from the three- phase power supply input (202).
